Europäisches Patentamt

European Patent Office

Office européen des brevets

(19)

(11) EP 0 809 797 B1

(12) FASCICULE DE BREVET EUROPEEN

(45) Date de publication et mention
de la délivrance du brevet:
**28.07.1999 Bulletin 1999/30**

(21) Numéro de dépôt: **96901870.4**

(22) Date de dépôt: **29.01.1996**

(51) Int Cl.⁶: **G01N 21/45**

(86) Numéro de dépôt international:
**PCT/FR96/00145**

(87) Numéro de publication internationale:
**WO 96/25656 (22.08.1996 Gazette 1996/38)**

(54) **DISPOSITIF INTERFEROMETRIQUE DE DETECTION**

INTERFEROMETRISCHE DETEKTIONSVORRICHTUNG

INTERFEROMETRIC SENSING DEVICE

(84) Etats contractants désignés:
**DE DK GB IT SE**

(30) Priorité: **15.02.1995 FR 9501817**

(43) Date de publication de la demande:
**03.12.1997 Bulletin 1997/49**

(73) Titulaire: **SCHNEIDER ELECTRIC SA
92100 Boulogne Billancourt (FR)**

(72) Inventeurs:
 • **BENECH, Pierre
 F-38000 Grenoble (FR)**
 • **HELMERS, Hakon c/o Schneider Electric SA
 F-38050 Grenoble Cedex 9 (FR)**

(74) Mandataire: **Jouvray, Marie-Andrée et al
Schneider Electric SA,
Sce. Propriété Industrielle
38050 Grenoble Cédex 09 (FR)**

(56) Documents cités:
**WO-A-92/20990          WO-A-93/20430**

 • **APPLIED OPTICS, vol. 33, no. 25, 1 Septembre
 1994, pages 5954-5958, XP002002315 SCHANEN
 DUPORT ET AL.: "NEW INTEGRATED OPTICS
 INTERFEROMETER,ETC."**
 • **SENSORS AND ACTUATORS B, vol. 11, 1
 Octobre 1993, pages 361-374, XP002002316
 BRANDENBURG ET AL.: "INTEGRATED
 OPTICAL GAS SENSORS,ETC."**

Printed by Jouve, 75001 PARIS (FR)

## Description

L'invention concerne un dispositif de détection d'une caractéristique d'un milieu par interférométrie, réalisé en optique intégrée et comportant, sur un substrat , un microguide d'entrée connecté par une extrémité d'entrée à des moyens d'émission d'un faisceau lumineux, des moyens de formation pour former, à partir dudit faisceau, au moins un faisceau de référence et un faisceau de mesure, des moyens pour faire interférer les faisceaux de référence et de mesure et fournir des signaux d'interférence, des moyens de détection, connectés à une extrémité de sortie d'un microguide de sortie transmettant les signaux d'interférence, et une zone d'interaction entre le faisceau de mesure et le milieu à étudier.

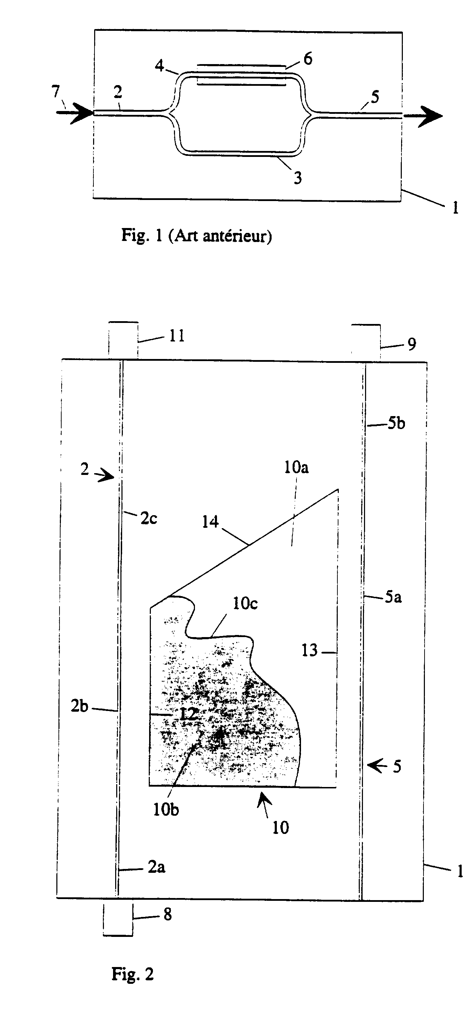

Il est connu d'utiliser un interféromètre optique pour détecter la présence ou la concentration d'un gaz. Un dispositif connu (Article "Gas sensor based on an integrated optical interferometer", de A. BRANDENBURG et al., SPIE, vol. 1510 Chemical and Medical Sensors, 1991) utilisant un interféromètre du type Mach-Zehnder, réalisé en optique intégrée, est représenté à la figure 1. L'interféromètre comporte un substrat 1 sur lequel est réalisé un microguide d'entrée 2. Le microguide d'entrée 2 est divisé, par une première jonction en Y, en deux bras, un bras de référence 3 et un bras de mesure 4. Les deux bras se rejoignent, au moyen d'une seconde jonction en Y, dans un microguide de sortie 5. Une zone 6 d'interaction avec le gaz à étudier recouvre une partie du bras de mesure 4. Cette zone d'interaction est, par exemple, recouverte d'un film capable d'absorber un gaz prédéterminé et dont l'indice de réfraction change en fonction de la quantité de gaz absorbé. Un faisceau lumineux d'entrée 7 appliqué à l'entrée du microguide 2 est donc séparé en deux faisceaux dont l'un est transmis par le bras de référence au microguide de sortie et l'autre, transmis par le bras de mesure, subit un déphasage variable en fonction de la variation de l'indice du film absorbant. Les faisceaux de référence et de mesure interfèrent dans la seconde jonction en Y et le signal d'interférence ainsi formé, détecté à la sortie du microguide 5, est représentatif du gaz à étudier.

L'invention a pour but un dispositif présentant une sensibilité accrue tout en étant facile à réaliser en optique intégrée.

Selon l'invention, ce but est atteint par le fait que les moyens de formation comportent un guide plan disposé entre les microguides d'entrée et de sortie , de manière à réaliser un couplage de lumière par effet tunnel optique entre chaque microguide et le guide plan, et comportant au moins une première zone, non sensible au milieu, et une seconde zone constituant la zone d'interaction avec le milieu. La forme des différentes zones peut être quelconque.

Le guide plan est délimité par deux côtés respectivement parallèles aux microguides d'entrée et de sortie, chacun desdits côtés étant disposé à proximité d'une partie intermédiaire d'un microguide associé.

Selon un développement de l'invention, la zone d'interaction comporte un superstrat sensible au milieu à étudier et déposé sur le substrat.

Selon une première variante de réalisation, les microguides d'entrée et de sortie sont parallèles et la zone d'interaction a la forme d'un parallélogramme ayant deux côtés parallèles aux microguides.

Selon une seconde variante, la zone d'interaction a la forme d'un triangle ayant un côté sur le côté du guide plan associé au microguide d'entrée et un sommet opposé sur le côté du guide plan associé au microguide de sortie.

D'autres avantages et caractéristiques ressortiront plus clairement de la description qui va suivre de modes particuliers de réalisation de l'invention, donnés à titre d'exemples non limitatifs et représentés aux dessins annexés dans lesquels :

La figure 1 représente un dispositif de type connu.

La figure 2 représente un mode de réalisation du dispositif selon l'invention.

Les figures 3 et 4 représentent deux modes de réalisation particuliers du guide plan du dispositif selon la figure 2, dans un interféromètre à deux ondes.

La figure 5 illustre la courbe de réponse amplitude-déphasage des dispositifs selon les figures 3 et 4.

Les figures 6, 7 et 9 représentent trois modes de réalisation particuliers du guide plan du dispositif selon la figure 2, dans un interféromètre à ondes multiples.

Les figures 8 et 10 illustrent respectivement les courbes de réponse amplitude-déphasage des dispositifs selon les figures 7 et 9.

Le dispositif selon la figure 2 est réalisé en optique intégrée sur un substrat 1. Comme dans les dispositifs connus, une extrémité d'entrée d'un microguide 2 d'entrée est connectée à une source de lumière 8. Une telle source peut être constituée par une diode laser fixée directement sur le substrat 1 ou être connectée à l'entrée du microguide 2 par l'intermédiaire d'une fibre optique. L'extrémité de sortie d'un microguide de sortie 5 est connectée à un photo-détecteur 9. Les microguides 2 et 5 sont, de préférence, sensiblement parallèles et une zone de transition, constituée par un guide plan 10, est disposée entre les microguides 2 et 5, de manière à réaliser un couplage de la lumière, par effet tunnel optique, appelé aussi réflexion totale frustrée, entre le microguide d'entrée 2 et le guide plan 10 et entre le guide plan 10 et le microguide de sortie 5.

Une première partie 2a, d'entrée, du microguide 2, connectée à la source 8, sert à stabiliser le mode fondamental du microguide. Puis, dans une seconde partie 2b, intermédiaire, du microguide 2 disposée à proximité de la zone de transition 10, la lumière est couplée par effet tunnel optique dans la zone 10. Le couplage est relativement faible, assurant ainsi une distribution lumineuse homogène dans la zone 10. La partie de la lumière non couplée sort du dispositif par une troisième partie 2c, de sortie, du microguide 2. Un photodétecteur de référence 11 est connecté à la sortie du microguide 2. Le signal de référence ainsi mesuré peut être utilisé dans un ensemble de traitement pour corriger les variations dans la mesure du signal d'interférence faite par le photodétecteur 9 dues à des variations de la source 8.

La zone de transition 10 est divisée en au moins deux zones 10a et 10b. Une première zone 10a sert de zone de référence. La seconde zone 10b constitue une zone d'interaction avec le milieu à étudier. Elle est recouverte d'un superstrat dont l'indice optique et/ou l'épaisseur se modifie lorsqu'il interagit avec le milieu précité. Cette modification engendre une modification de la constante de propagation de l'onde optique dans le milieu optique constitué par la partie du guide plan située au-dessous du superstrat.

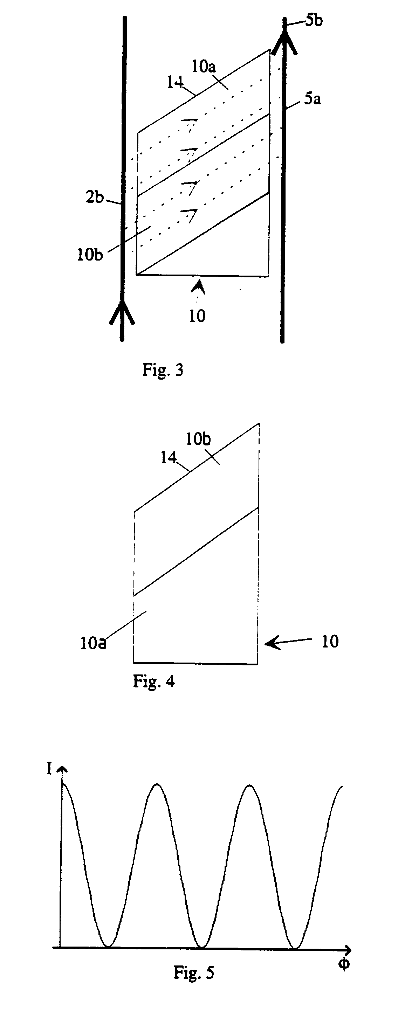

La lumière qui a traversé la zone 10 est couplée, par effet tunnel optique, avec une partie intermédiaire 5a, disposée à proximité, du microguide de sortie. La partie 5a forme ainsi une zone de couplage et d'interférence dans laquelle se forment des signaux d'interférence constitués par la somme des rayons lumineux provenant de la partie 2b et ayant traversé respectivement les zones 10a et 10b. Il y a donc interférence entre des faisceaux lumineux de référence ayant traversé la zone de référence 10a et des faisceaux lumineux de mesure, déphasés en fonction de la composition du milieu à étudier. Ceci est plus particulièrement illustré sur la figure 3 où quelques rayons lumineux sont représentés. Les signaux d'interférence sont transmis au photodétecteur 9 par une partie de sortie 5b du microguide 5.

Les zones de référence 10a et d'interaction 10b peuvent avoir une forme géométrique quelconque. Sur la figure 2, elles sont séparées par une ligne 10c, de forme totalement arbitraire. Selon un mode de réalisation préférentiel représenté à la figure 2, la zone de transition 10 est trapézoïdale. Elle comporte une petite base 12 à proximité de la partie 2b et parallèle à celle-ci et une grande base 13 à proximité de la partie 5a du microguide de sortie 5. Sur la figure 2 elle a la forme d'un trapèze rectangle, dont le côté incliné 14 est disposé du côté des extrémités de sortie des microguides 2 et 5.

La réalisation d'un tel dispositif est très simple et facilement reproductible. Un dispositif standard de base comporte les microguides 2 et 5 et le guide plan 10 et éventuellement la source 8 et les photodétecteurs 9 et 11. Un tel dispositif peut être fabriqué en série et être adapté aux besoins par un simple dépôt d'un superstrat adapté au milieu à étudier et dont la forme géométrique est choisie arbitrairement. Le cas échéant la zone de référence 10a peut également être recouverte par tout matériau non sensible au milieu à étudier.

Dans les variantes des figures 3 et 4, la zone d'interaction 10b a la forme d'un parallélogramme ayant deux côtés situés respectivement sur la petite base 12 et sur la grande base 13 du trapèze rectangle constituant la zone de transition. Les autres côtés du parallélogramme sont parallèles au côté incliné 14 du trapèze. Sur la figure 3, la zone d'interaction est disposée dans la partie centrale de la zone 10. La zone de référence 10a est alors constituée par la partie restante de la zone 10 disposée au-dessus de la zone 10b. Sur la figure 4, la zone 10b est disposée dans la partie supérieure de la zone 10. Dans les deux cas l'interféromètre ainsi formé est un interféromètre à deux ondes dont la courbe de réponse est de la forme représentée à la figure 5. La courbe représente l'intensité I des signaux d'interférence en fonction du déphasage $\emptyset$, introduit par la zone d'interaction 10b, entre les faisceaux de mesure et de référence. Une telle courbe est de la forme

$$I = Io\,(1 + Cos\,\emptyset) \qquad (1)$$

où Io est l'intensité des signaux en l'absence de déphasage. Le déphasage $\emptyset$ peut être proportionnel à l'indice de réfraction n du superstrat déposé sur la zone d'interaction 10b, variable en fonction du milieu à étudier. Une réponse de ce type est adaptée pour des grandes plages de mesure. La largeur de la zone de la zone d'interaction 10b par rapport à la zone de référence 10a décide de la répartition de l'intensité lumineuse entre ces deux zones, ce qui permet d'optimiser le contraste de l'interféromètre.

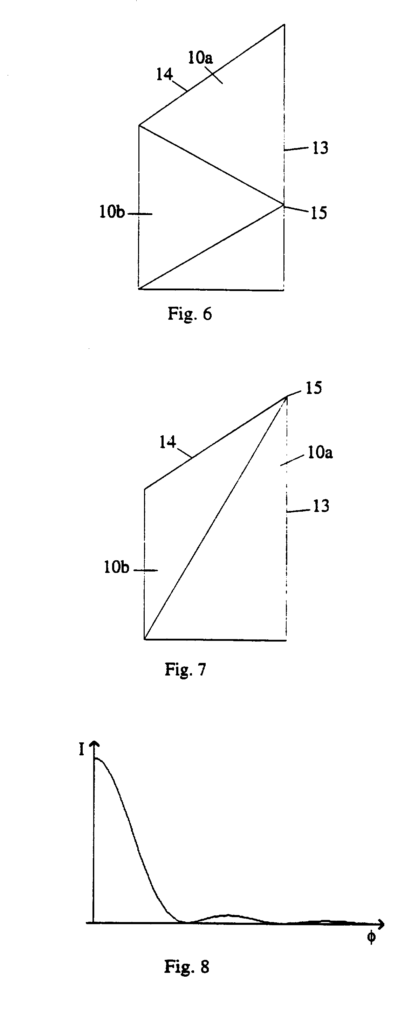

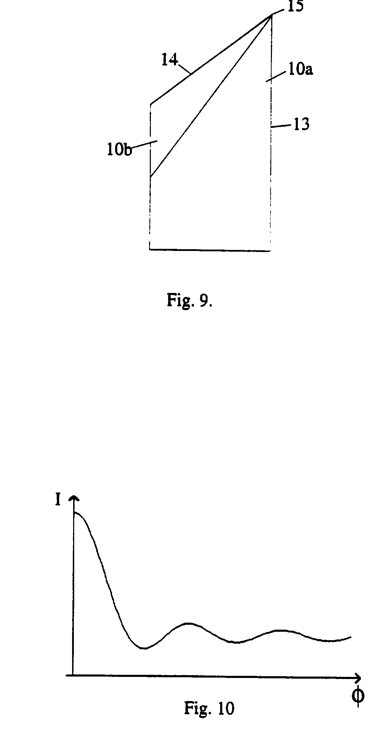

Dans les variantes des figures 6, 7 et 9, la zone d'interaction 10b a la forme d'un triangle dont un côté est situé sur la petite base 12 du trapèze et le sommet opposé 15 sur la grande base du trapèze. Sur les figures 6 et 7, le côté précité du triangle a la même longueur que la petite base 12, tandis que sur la figure 9, ledit côté est plus petit que la petite base 12. Sur la figure 6, le sommet 15 est situé dans la partie médiane de la grande base 13. Sur les figures 7 et 9, un second côté du triangle est confondu avec le côté incliné 14 du trapèze.

La courbe de réponse des variantes des figures 6 et 7, représentée à la figure 8 est de la forme :

$$I = Io\,(1 - cos\,\emptyset)/\emptyset^2 \qquad (2)$$

Cette réponse est plus particulièrement adaptée à la détection de niveau sans ambiguïté, un niveau prédéterminé d'intensité correspondant à un niveau de déphasage donné, lorsqu'on est au-dessus du niveau des oscillations.

La figure 10 représente la courbe de réponse de la variante de la figure 9, qui est une réponse intermédiaire entre celles des figures 5 et 8.

Dans les trois variantes des figures 6, 7 et 9, l'interféromètre ainsi formé est un interféromètre à ondes multiples.

L'invention n'est pas limitées aux formes géométriques particulières représentées sur les figures, mais s'étend à toute forme géométrique de la zone de transition et des lignes de séparation des zones d'interaction 10b et de référence 10a. La zone 10 peut en particulier être divisée en plusieurs zones sensibles et en plusieurs zones de référence.

La réponse amplitude-déphasage de l'interféromètre est donc déterminée par la forme géométrique des couches déposées sur la surface du dispositif. Elle peut être du même type que celle d'un résonateur, d'un interféromètre à deux ondes, ou de toute autre réponse intermédiaire.

Dans un interféromètre à deux ondes de type connu, tel que représenté à la figure 1, le dépôt d'un superstrat absorbant sur la zone d'interaction 6 peut déséquilibrer les bras de l'interféromètre, ce qui détériore le contraste du signal de mesure. Avec un dispositif selon l'invention, le libre choix de la géométrie de la zone d'interaction permet d'éviter ce problème.

De plus, la surface d'interaction 10b peut être importante, ce qui diminue la sensibilité de l'interféromètre aux non homogénéités éventuelles de superstrat recouvrant la zone d'interaction.

Par ailleurs, le dispositif selon l'invention ne comporte pas, contrairement aux interféromètres de type Fabry-Pérot connus, d'éléments réflecteurs qui sont d'une réalisation délicate en optique intégrée. Il ne comporte pas non plus, contrairement au dispositif connu selon la figure 1, de guides courbes qui posent des problèmes dans certaines technologies d'optique intégrée. n en résulte une simplicité de réalisation qui peut conduire à un abaissement conséquent du coût de production d'un capteur de ce type.

Bien entendu, le dispositif présente également tous les avantages inhérents à l'optique intégrée, notamment l'insensibilité aux vibrations, la compacité, la facilité de régulation en température, la possibilité de fabrication en série et la résistance aux parasites électromagnétiques.

Le dispositif décrit ci-dessus peut être utilisé pour réaliser des capteurs physiques, chimiques ou biologiques, le milieu à étudier venant en contact avec le superstrat déposé sur la zone d'interaction. Plus généralement, il est utilisable chaque fois que l'on souhaite établir une interaction entre un milieu extérieur et de la lumière.

**Revendications**

1. Dispositif de détection d'une caractéristique d'un milieu par interférométrie, réalisé en optique intégrée et comportant, sur un substrat (1), un microguide d'entrée (2) connecté par une extrémité d'entrée à des moyens (8) d'émission d'un faisceau lumineux, des moyens de formation (10a, 10b) pour former, à partir dudit faisceau, au moins un faisceau de référence et un faisceau de mesure, des moyens (5a) pour faire interférer les faisceaux de référence et de mesure et fournir des signaux d'interférence, des moyens (9) de détection, connectés à une extrémité de sortie d'un microguide de sortie (5) transmettant les signaux d'interférence, et une zone (10b) d'interaction entre le faisceau de mesure et le milieu à étudier, dispositif caractérisé en ce que les moyens de formation comportent un guide plan (10) disposé entre les microguides d'entrée et de sortie (2,5), de manière à réaliser un couplage de lumière par effet tunnel optique entre chaque microguide et le guide plan, et comportant au moins une première zone (10a), non sensible au milieu, et une seconde zone (10b) constituant la zone d'interaction avec le milieu.

2. Dispositif selon la revendication 1, caractérisé en ce que la zone d'interaction comporte un superstrat sensible au milieu à étudier et déposé sur le substrat (1).

3. Dispositif selon la revendication 2, caractérisé en ce que l'indice optique du superstrat varie en fonction de la caractéristique du milieu à étudier.

4. Dispositif selon la revendication 2, caractérisé en ce que l'épaisseur du superstrat varie en fonction de la caractéristique du milieu à étudier.

5. Dispositif selon l'une quelconque des revendications 1 à 4, caractérisé en ce que le guide plan (10) est délimité par deux côtés (12, 13) respectivement parallèles aux microguides d'entrée et de sortie (2, 5), chacun desdits côtés étant disposé à proximité d'une partie intermédiaire (2b, 5a) d'un microguide associé.

6. Dispositif selon la revendication 5, caractérisé en ce que le côté (13) du guide plan associé au microguide de sortie (5) est plus long que le côté (12) du guide plan associé au microguide d'entrée (2).

7. Dispositif selon l'une des revendications 5 et 6, caractérisé en ce que les microguides d'entrée et de sonie (2, 5) sont parallèles et en ce que la zone d'interaction (10b) a la forme d'un parallélogramme ayant deux côtés parallèles aux microguides (2, 5).

8. Dispositif selon l'une quelconque des revendications 5 et 6, caractérisé en ce que la zone d'interaction (10b) a la forme d'un triangle ayant un côté sur le côté (12) du guide plan (10) associé au microguide d'entrée (2) et un sommet opposé (15) sur le côté (13) du guide plan (10) associé au microguide de sortie (5).

9. Dispositif selon l'une quelconque des revendications 1 à 8, caractérisé en ce qu'il comporte des moyens (11) de détection d'un signal lumineux de référence, connectés à une extrémité de sortie du microguide d'entrée (2).

**Patentansprüche**

1. Detektoreinrichtung zur Eigenschaftsbestimmung eines Mediums durch Interferometrie, die in integrierter Optik ausgeführt ist und - eingebracht in ein Substrat (1) - einen Eingangs-Mikro-Wellenleiter (2), der über ein Eingangsende mit Mitteln (8) zur Aussendung eines Lichtstrahls verbunden ist, Umformmittel (10a, 10b) zur Umformung des genannten Strahls in mindestens einen Referenzstrahl und einen Meßstrahl, Mittel (5a) zur Zusammenführung des Referenzstrahls und des Meßstrahls sowie zur Bereitstellung von Interferenzsignalen, Detektormittel (9), die mit einem Ausgangsende eines die Interferenzsignale übertragenden Ausgangs-Mikro-Wellenleiters (5) verbunden sind, sowie einen Bereich (10b) zur Einwirkung des zu untersuchenden Mediums auf den Meßstrahl umfaßt, dadurch gekennzeichnet, daß die Umformmittel einen Flach-Wellenleiter (10) umfassen, der zwischen dem Eingangs- und dem Ausgangs-Mikro-Wellenleiter (2, 5) angeordnet ist, so daß die Lichteinkopplung zwischen jedem Mikro-Wellenleiter und dem Flach-Wellenleiter durch optischen Tunneleffekt erfolgt, und mindestens einen, gegenüber dem Medium unempfindlichen ersten Bereich (10a) sowie einen, den Einwirkbereich des Mediums bildenden zweiten Bereich (10b) umfaßt.

2. Einrichtung nach Anspruch 1, dadurch gekennzeichnet, daß der Einwirkbereich eine auf das Substrat (1) aufgebrachte Deckschicht umfaßt, die gegenüber dem zu analysierenden Medium empfindlich ist.

3. Einrichtung nach Anspruch 2, dadurch gekennzeichnet, daß sich die Brechzahl der Deckschicht in Abhängigkeit von der zu analysierenden Eigenschaft des Mediums ändert.

4. Einrichtung nach Anspruch 2, dadurch gekennzeichnet, daß sich die Dicke der Deckschicht in Abhängigkeit von der zu analysierenden Eigenschaft des Mediums ändert.

5. Einrichtung nach irgendeinem der Ansprüche 1 bis 4, dadurch gekennzeichnet, daß der Flach-Wellenleiter (10) durch zwei parallel zum Eingangs- bzw. Ausgangs-Mikro-Wellenleiter (2, 5) verlaufende Seiten (12, 13) begrenzt wird, wobei jede dieser Seiten in räumlicher Nähe zu einem Zwischenabschnitt (2b, 5a) eines jeweils zugeordneten Mikro-Wellenleiters angeordnet ist.

6. Einrichtung nach Anspruch 5, dadurch gekennzeichnet, daß die dem Ausgangs-Mikro-Wellenleiter (5) zugeordnete Seite (13) des Flach-Wellenleiters länger ist als die dem Eingangs-Mikro-Wellenleiter (2) zugeordnete Seite (12) des Flach-Wellenleiters.

7. Einrichtung nach einem der Ansprüche 5 und 6, dadurch gekennzeichnet, daß der Eingangs- und der Ausgangs-Mikro-Wellenleiter (2, 5) parallel zueinander angeordnet sind und der Einwirkbereich (10b) als Parallelogramm mit zwei parallel zu den Mikro-Wellenleitern (2, 5) verlaufenden Seiten ausgebildet ist.

8. Einrichtung nach irgendeinem der Ansprüche 5 und 6, dadurch gekennzeichnet, daß der Einwirkbereich (10b) in Form eines Dreiecks mit einer auf der, dem Eingangs-Mikro-Wellenleiter (2) zugeordneten Seite (12) des Flach-Wellenleiters (10) liegenden Seite sowie einer gegenüberliegenden, auf der dem Ausgangs-Mikro-Wellenleiter (5) zugeordneten Seite (13) des Flach-Wellenleiters (10) liegenden Spitze (15) ausgeführt ist.

9. Einrichtung nach irgendeinem der Ansprüche 1 bis 8, dadurch gekennzeichnet, daß sie mit einem Ausgangsende des Eingangs-Mikro-Wellenleiters (2) verbundene Detektormittel (11) zur Erfassung eines Referenz-Lichtsignals umfaßt.

**Claims**

1. A device for detection of a characteristic of a medium by interferometry, manufactured in integrated optics technology and comprising, on a substrate (I), an input microguide (2) connected by an input end to means (8) for emitting a light beam, forming means (10a, 10b) for forming at least one reference beam and one measurement beam from said light beam, means (5a) for making the reference beam and measurement beam interfere and supply interference signals, means (9) for detection connected to an output end of an output microguide (5) transmitting the interference signals, and an interaction zone (10b) between the measurement beam and the medium to be studied, a device characterized in that the forming means comprise a flat guide (10) arranged between the input and output microguides (2, 5) in such a way as to achieve light coupling by optical tunnel effect between each microguide and the flat guide, and comprising at least a first zone (10a), not sensitive to the medium, and a second zone (10b) constituting the interaction zone with the medium.

**2.** The device according to claim 1, characterized in that the interaction zone comprises a superstrate sensitive to the medium to be studied and deposited on the substrate (1).

**3.** The device according to claim 2, characterized in that the optical coefficient of the superstrate varies according to the characteristic of the medium to be studied.

**4.** The device according to claim 2, characterized in that the thickness of the superstrate varies according to the characteristic of the medium to be studied.

**5.** The device according to any one of the claims 1 to 4, characterized in that the flat guide (10) is bounded by two sides (12, 13) respectively parallel to the input and output microguides (2, 5), each of said sides being arranged near to an intermediate part (2b, 5a) of an associated microguide.

**6.** The device according to claim 5, characterized in that the side (13) of the flat guide associated to the output microguide (5) is longer than the side (12) of the flat guide associated to the input microguide (2).

**7.** The device according to one of the claims 5 and 6, characterized in that the input and output microguides (2, 5) are parallel and that the interaction zone (10b) has the shape of a parallelogram having two sides parallel to the microguides (2, 5).

**8.** The device according to either one of the claims 5 and 6, characterized in that the interaction zone (10b) has the shape of a triangle having one side on the same side (12) as the flat guide (10) associated to the input microguide (2) and an opposite peak (15) on the same side (13) as the flat guide (10) associated to the output microguide (5).

**9.** The device according to any one of the claims 1 to 8, characterized in that it comprises means (11) for detecting a reference light signal connected to an output end of the input microguide (2).

Fig. 1 (Art antérieur)

Fig. 2

Fig. 3

Fig. 4

Fig. 5

Fig. 6

Fig. 7

Fig. 8

EP 0 809 797 B1

Fig. 9.

Fig. 10